# FASCICULE DE BREVET EUROPEEN

(11) **EP 4 126 672 B1**
(45) Date de publication et mention de la délivrance du brevet: **24.04.2024**
(21) Numéro de dépôt: 21717152.9
(22) Date de dépôt: 23.03.2021
(51) Int. Cl.: B64D 27/02, B64D 27/24, B64C 23/06

(54) **SYSTÈME DE PROPULSION POUR AÉRONEF À VOILURE FIXE, ET AÉRONEF ASSOCIÉ**
ANTRIEBSSYSTEM FÜR STARRFLÜGELFLUGZEUG UND DAMIT AUSGESTATTETES FLUGZEUG
PROPULSION SYSTEM FOR FIXED WING AIRCRAFT AND AIRCRAFT EQUIPPED WITH SAID SYSTEM

(30) Priorité: 01.04.2020 FR 2003257
(43) Date de publication de la demande: 08.02.2023
(73) Titulaire: SAFRAN, 75015 Paris (FR)
(72) Inventeur: VIGUIER, Christophe Ludovic Jean-Claude, 77550 MOISSY-CRAMAYEL (FR); FEFERMANN, Yann, CRAMAYEL 77550 (FR); PETIBON, Stéphane, 77550 MOISSY-CRAMAYEL (FR); ROUGIER, Florent, 77550 MOISSY-CRAMAYEL (FR)
(74) Mandataire: Cabinet Camus Lebkiri
(86) Numéro de dépôt international: PCT/FR2021/050492
(87) Numéro de publication internationale: WO 2021/198585

(56) Documents cités:
- EP-A1- 2 878 538
- EP-A1- 3 296 212
- EP-A1- 3 318 492
- EP-B1- 2 878 538
- EP-B1- 3 296 212
- EP-B1- 3 318 492
- FR-A1- 3 085 667
- US-A1- 2016 355 272

## Description

### DOMAINE TECHNIQUE DE L'INVENTION

La présente invention concerne un système de propulsion comprenant des propulseurs à moteurs électriques, pour un aéronef à voilure fixe. Elle concerne aussi un aéronef à voilure fixe muni d'un tel système de propulsion, en particulier un aéronef à propulsion hybride équipé à la fois des turbopropulseurs et des propulseurs à moteurs électriques.

### ARRIERE-PLAN TECHNOLOGIQUE DE L'INVENTION

Pour les aéronefs à voilure fixe, une propulsion électrique ou hybride est une alternative particulièrement intéressante à une propulsion réalisée uniquement par turbopropulseurs.

En effet, employer une propulsion électrique ou hybride en phase de décollage ou d'atterrissage peut permettre de réduire l'émission de gaz polluants au voisinage des aéroports, et dans les zones urbaines situées à proximité.

L'emploi de propulseurs électriques, en complément ou à la place de turbopropulseurs, facilite par ailleurs la réalisation d'architectures de propulsions évoluées comprenant par exemple des propulseurs additionnels de bout d'aile, qui permettent de réduire la trainée de bout d'aile, ou comprenant un ou des propulseurs arrière supplémentaires, à aspiration de la couche limite (propulseurs dits aussi « à ingestion de la couche limite », ou BLI en anglais pour « Boundary Layer Ingestion »), par exemple.

Dans ce domaine, le document US 2018/0118356 décrit un aéronef dont la propulsion, de type « turbo-électrique distribuée », est réalisée entièrement grâce à des propulseurs électriques (sans turbopropulseur). Ces propulseurs sont répartis, ou en d'autres termes distribués, le long des ailes de l'aéronef.

Certains de ces propulseurs, placés en bout d'aile, sont employés comme propulseurs de « contrôle de vol », pour permettre un contrôle de la direction de l'aéronef. Leurs vitesses de rotation respectives sont pilotées finement, propulseur par propulseur. Les autres propulseurs, appelés propulseurs « de poussée », sont employés pour fournir l'essentiel de la poussée nécessaire au vol de l'aéronef. Ils sont situés entre les propulseurs de « contrôle de vol » et le fuselage de l'aéronef.

L'aéronef en question comprend par ailleurs une génératrice de courant alternatif entraînée par une turbine (turbine non pourvue d'hélice), pour l'alimentation des moteurs électriques des propulseurs.

Les moteurs des propulseurs « de poussée » sont alimentés directement par cette génératrice, sans convertisseur intermédiaire, ce qui limite les pertes dans le circuit d'alimentation.

Pour ce qui est des propulseurs de « contrôle de vol », ils sont reliés électriquement à la génératrice via un étage intermédiaire fonctionnant en courant continu. Chaque propulseur de « contrôle de vol » est relié à cet étage intermédiaire par un convertisseur de courant continu-alternatif (qui converti un courant continu en courant alternatif), de manière à ce que ce propulseur en question soit alimenté finalement en courant alternatif. Cette structure, avec une conversion intermédiaire sous la forme de courant continu, permet de contrôler finement la vitesse de rotation des propulseurs de « contrôle de vol », indépendamment les uns des autres (et indépendamment de la vitesse de rotation de la turbine), grâce à quoi un contrôle de direction de l'aéronef est obtenu.

Mais avec le système de propulsion décrit ci-dessus, les émissions de gaz polluants lors des phases de décollage, d'atterrissage et de déplacement au sol restent importantes (puisque la turbine fonctionne nécessairement, pendant ces phases, pour alimenter électriquement les propulseurs « de poussée » qui fournissent l'essentiel de la poussée).

### RESUME DE L'INVENTION

Dans ce contexte, on propose un système de propulsion pour un aéronef à voilure fixe comprenant :
- une génératrice de courant alternatif,
- au moins un propulseur de bout d'aile comprenant un moteur à courant alternatif, ayant un sens de rotation qui s'oppose à la formation des tourbillons marginaux de bout d'aile,
- au moins un propulseur d'augmentation de portance, comprenant un moteur à courant alternatif,
- un premier circuit d'alimentation AC, qui relie électriquement la génératrice au propulseur de bout d'aile, et
- un deuxième circuit d'alimentation AC, qui relie électriquement la génératrice au propulseur d'augmentation de portance,
- dans lequel le deuxième circuit d'alimentation comprend :
   - un étage intermédiaire de distribution de courant continu,
   - une ou plusieurs batteries électriques connectées audit étage intermédiaire de distribution de courant continu,
   - un convertisseur de courant alternatif-continu, qui relie électriquement la génératrice audit étage intermédiaire de distribution de courant continu, et
   - un convertisseur de courant continu-alternatif, qui relie électriquement ledit étage intermédiaire au propulseur d'augmentation de portance,
- et dans lequel le premier circuit d'alimentation est configuré pour délivrer au propulseur de bout d'aile un courant alternatif produit par la génératrice, sans conversion intermédiaire de ce courant alternatif sous la forme d'un courant continu.

Grâce à l'étage intermédiaire de distribution de courant continu, et grâce aux convertisseurs du deuxième circuit, le ou les propulseurs d'augmentation de portance, dont le rôle est essentiel en phase de décollage, peuvent être alimentés sur batterie lors de cette phase. Cela permet de réduire de manière très intéressante les émissions de gaz polluants dans les zones aéroportuaires et au voisinage de celles-ci.

De plus, cette structure particulière du deuxième circuit permet d'ajuster électriquement la vitesse de rotation du ou des propulseurs d'augmentation de portance avec beaucoup de souplesse, indépendamment de la vitesse de rotation de la génératrice (qui, en pratique, est entraînée par une turbine). Cela permet donc d'ajuster la portance avec souplesse, autorisant ainsi des changements d'altitude rapides, ponctuels, ce qui augmente l'agilité de l'aéronef.

Par ailleurs, relier le ou les propulseurs de bout d'aile à la génératrice en quelque sorte directement, sans conversion intermédiaire sous la forme de courant continu, permet une économie de carburant qui est en fait très substantielle, sur l'ensemble d'un vol typique de l'aéronef.

Cette réduction de consommation globale peut paraître surprenante à première vue, car le rôle de propulseurs de bout d'aile semble a priori secondaire, dans la propulsion de l'aéronef (de tels propulseurs jouent d'ailleurs un rôle annexe, dans le document US 2018/0118356). Mais en fait, des propulseurs de bout d'aile permettent de réduire fortement la trainée de bout d'aile (due à la formation de tourbillons marginaux en bouts d'aile), trainée qui concoure notablement à la trainée totale subie par l'aéronef. Il est donc souhaitable de faire fonctionner ces propulseurs de bout d'aile presque en permanence (et de leur conférer un rôle notable dans la propulsion de l'aéronef), et donc, vu le caractère presque permanent de leur fonctionnement, de minimiser les pertes électriques dans leur circuit d'alimentation et augmenter ainsi le rendement de la chaine et minimiser la masse globale de cette même chaine. En l'occurrence, cette minimisation des pertes est obtenue par la liaison en quelque sorte directe, sans conversion alternatif-continu, entre la génératrice et le ou les propulseurs de bout d'aile.

On peut prévoir en particulier que chaque propulseur d'augmentation de portance soit à positionner entre : le propulseur de bout d'aile ou l'un des propulseurs de bout d'aile d'une part, et un fuselage de l'aéronef d'autre part.

Le système de propulsion qui vient d'être présenté peut comprendre en outre un turbopropulseur. La génératrice mentionnée plus haut peut alors être entraînée par la turbine de ce turbopropulseur, par exemple.

Cette configuration permet d'améliorer encore la consommation énergétique globale de l'aéronef (consommation sur l'ensemble d'un vol régional de quelques centaines de kilomètres, par exemple).

En effet, cette configuration permet, en phase de croisière ou de montée, d'assurer la propulsion de l'aéronef grâce au turbopropulseur et au propulseur de bout d'aile tout en maintenant le ou les propulseurs d'augmentation de portance éteints.

Pendant ces phases de vol, particulièrement longues et consommatrices en carburant, on évite ainsi les pertes que causeraient la conversion alternatif-continu, dans le deuxième circuit d'alimentation.

Autrement formulé, grâce au turbopropulseur, le deuxième circuit d'alimentation, qui induit des pertes électriques supplémentaires (mais qui permet en contrepartie un décollage et atterrissage peu polluants), n'est mis à contribution que pendant une durée réduite, en phase de décollage ou d'atterrissage (ou pour des variations rapides d'altitudes).

Outre les caractéristiques mentionnées ci-dessus, le système de propulsion conforme à l'invention peut présenter une ou plusieurs caractéristiques complémentaires parmi les suivantes, considérées individuellement ou selon toutes les combinaisons techniquement possibles :
- le premier circuit d'alimentation et le deuxième circuit d'alimentation sont reliés l'un à l'autre par un étage de distribution de courant alternatif, commun à ces deux circuits d'alimentation, l'étage de distribution de courant alternatif étant lui-même relié à la génératrice, le convertisseur de courant alternatif-continu du deuxième circuit d'alimentation étant connecté entre l'étage de distribution de courant alternatif et l'étage intermédiaire de distribution de courant continu ;
- le convertisseur de courant alternatif-continu est réversible, ledit convertisseur autorisant à la fois un transfert de puissance électrique depuis l'étage de distribution de courant alternatif vers l'étage intermédiaire de distribution de courant continu, et depuis l'étage intermédiaire de distribution de courant continu vers l'étage de distribution de courant alternatif ;
- le convertisseur de courant continu-alternatif du deuxième circuit d'alimentation est réversible, ledit convertisseur autorisant à la fois un transfert de puissance électrique depuis l'étage intermédiaire de distribution de courant continu vers le propulseur d'augmentation de portance, et depuis le propulseur d'augmentation de portance vers l'étage intermédiaire de distribution de courant continu ;
- le système de propulsion comprend en outre une unité de commande électronique qui comporte au moins un processeur et une mémoire, l'unité de commande étant programmée pour, lors d'un vol de l'aéronef comprenant notamment une phase de décollage, une phase de croisière et une phase d'atterrissage, commander le moteur du propulseur d'augmentation de portance de manière à ce que ce propulseur :
   - délivre une puissance mécanique de propulsion en phase de décollage et/ou d'atterrissage,
   - mais reste éteint pendant la majeure partie de la phase de croisière ;
- l'unité de commande du système de propulsion est programmée pour, pendant la majeure partie du vol de l'aéronef, commander au moteur du propulseur de bout d'aile de délivrer une puissance mécanique de propulsion ;
- le propulseur d'augmentation de portance comprend une hélice à pas fixe ;
- le propulseur de bout d'aile comprend une hélice à pas variable.

Un autre aspect de l'invention concerne un aéronef à voilure fixe comprenant :
- un fuselage, une aile gauche qui s'étend à gauche du fuselage et une aile droite qui s'étend à droite du fuselage,
- un premier système de propulsion et un deuxième système de propulsion, tels que décrits ci-dessus,
- les propulseurs de bout d'aile des premier et deuxième systèmes de propulsion étant situés respectivement au bout de l'aile gauche et au bout de l'aile droite, ou inversement,
- les propulseurs d'augmentation de portance étant situés entre le fuselage de l'aéronef et les propulseurs de bout d'aile.

L'aéronef qui vient d'être présenté peut présenter en outre une ou plusieurs caractéristiques complémentaires parmi les suivantes, considérées individuellement ou selon toutes les combinaisons techniquement possibles :
- le premier système de propulsion et le deuxième système de propulsion comprennent chacun un turbopropulseur ;
- le turbopropulseur du premier système de propulsion, qui entraine la génératrice du premier système de propulsion, est situé à gauche du fuselage tandis que le propulseur de bout d'aile du premier système de propulsion est situé au bout de l'aile droite de l'aéronef ;
- le turbopropulseur du deuxième système de propulsion, qui entraine la génératrice du deuxième système de propulsion, est situé à droite du fuselage, tandis que le propulseur de bout d'aile du deuxième système de propulsion est situé au bout de l'aile gauche de l'aéronef ;
- le premier système de propulsion comprend au moins deux propulseurs d'augmentation de portance, l'un situé à gauche et l'autre situé à droite du fuselage, ces deux propulseurs d'augmentation de portance étant tout deux reliés électriquement à l'étage intermédiaire de distribution de courant continu du premier système de propulsion ;
- le deuxième système de propulsion comprend au moins deux propulseurs d'augmentation de portance, l'un situé à gauche et l'autre situé à droite du fuselage, ces deux propulseurs d'augmentation de portance étant tout deux reliés électriquement à l'étage intermédiaire de distribution de courant continu du deuxième système de propulsion ;
- chaque propulseur de bout d'aile et chaque propulseur d'augmentation de portance est relié électriquement d'une part à la génératrice du premier système de propulsion et d'autre part à la génératrice du deuxième système de propulsion de manière à pouvoir être alimenté électriquement indifféremment soit par l'une soit par l'autre de ces deux génératrices ; cela permet de continuer à alimenter électriquement les différents propulseurs électrique même en cas de défaillance d'une des génératrices ou d'une de turbines entrainant ces génératrices.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
[Fig. 1] La figure 1 représente schématiquement un aéronef à voilure fixe selon un premier mode de réalisation, vu de dessus.
[Fig. 2] La figure 2 représente schématiquement un aéronef à voilure fixe selon un deuxième mode de réalisation, vu de dessus.
[Fig. 3] La figure 3 est une représentation schématique partielle d'un aéronef à voilure fixe selon un troisième mode de réalisation, montrant un premier système de propulsion de cet aéronef, vu de dessus.
[Fig. 4] La figure 4 est une représentation schématique partielle de l'aéronef de la figure 3, montrant un deuxième système de propulsion de cet aéronef, vu de dessus.
[Fig. 5] La figure 5 représente schématiquement un aéronef à voilure fixe selon un quatrième mode de réalisation., vu de dessus.
[Fig. 6] La figure 6 montre schématiquement, pour différents propulseurs d'un aéronef tel que celui de l'une des figures 1 à 5, à quel moment chacun de ces propulseurs est moteur, ou générateur, ou est éteint, lors d'un vol typique de l'aéronef.

### DESCRIPTION DETAILLEE

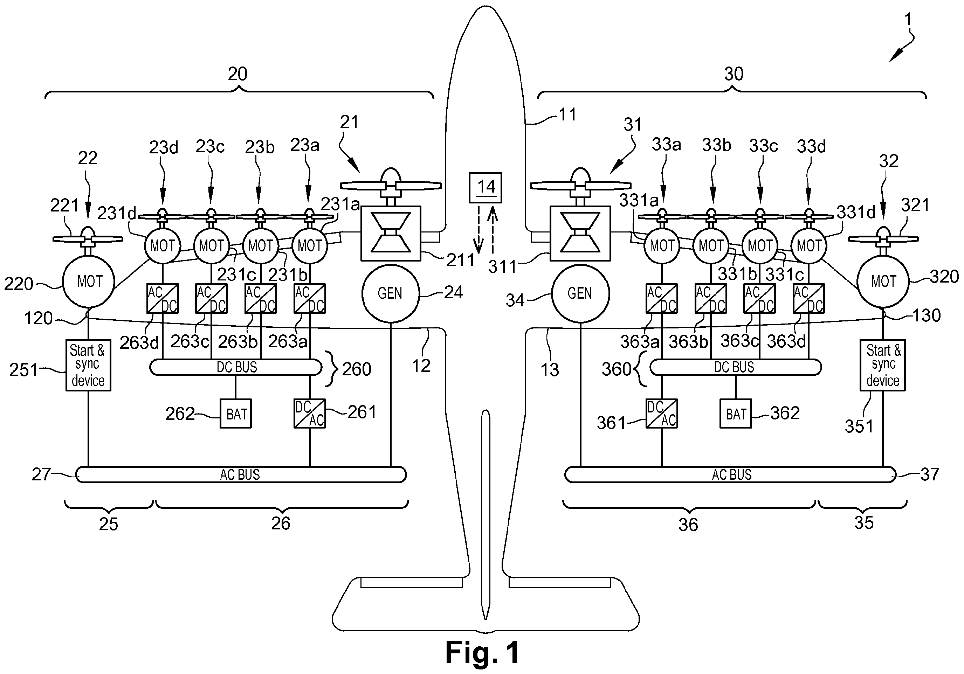

Les figures 1 à 5 représentent quatre modes de réalisation différents d'un aéronef à voilure fixe 1 ; 2 ; 3 ; 4 mettant en oeuvre les enseignements de l'invention.

Quel que soit le mode de réalisation considéré, l'aéronef 1 ; 2 ; 3 ; 4 comprend un fuselage 11 qui s'étend le long d'un axe longitudinal médian de l'aéronef, une aile gauche 12 qui s'étend à gauche du fuselage 11, et une aile droite 13 qui s'étend à droite du fuselage 11.

Les ailes gauche 12 et droite 13 peuvent être distinctes l'une de l'autre. Mais elles peuvent aussi former ensemble un élément de voilure d'un seul tenant, qui présente à l'air une surface continue s'étendant depuis l'extrémité libre 120 de l'aile gauche jusqu'à l'extrémité libre 130 de l'aile droite (dans ce cas, l'expression aile gauche désigne la partie de cet élément de voilure qui s'étend à gauche du fuselage, et il en est de même pour l'expression aile droite).

Dans chacun des modes de réalisation représentés, l'aéronef 1 ; 2 ; 3 ; 4 est pourvu d'un premier système de propulsion 20 ; 20' et d'un deuxième système de propulsion 20 ; 30', par exemple un système de propulsion gauche 20 et un système de propulsion droit 30, comme dans le cas de la figure 1.

Ces systèmes de propulsion, décrit en détail plus bas, sont bien adaptés, entre autres, aux cas où l'aéronef 1 ; 2 ; 3 ; 4 est un avion de transport de passagers (ou de marchandises) de type « commuter » (avion comprenant typiquement moins de 50 sièges passagers et pesant moins de 20 tonnes), destiné à effectuer des vols de type régional de quelques centaines de kilomètres.

Quoiqu'il en soit, ces systèmes de propulsion peuvent aussi bien équiper un aéronef à décollage long qu'un aéronef à décollage court.

Tels que représentés, le premier système de propulsion 20 ; 20' et le deuxième système de propulsion 30 ; 30' de l'aéronef comprennent chacun :
- un turbopropulseur 21, 31,
- un propulseur en bout d'aile 22, 32 (ou « Wing Tip Propulsor » en anglais), à moteur à courant alternatif, ici polyphasé,
- au moins un, ici N propulseurs d'augmentation de portance 23a, 23b, 23c, 23d, 33a, 33b, 33c, 33d (ou « High Lift Propulsor » en anglais), à moteur à courant alternatif, ici polyphasé,
- une génératrice 24, 34 de courant alternatif, ici polyphasée, entraînée par le turbopropulseur 21, 31 et qui permet d'alimenter électriquement les propulseurs électriques mentionnés ci-dessus, et
- un système de distribution d'électricité, qui relie la génératrice 24, 34 aux propulseurs électriques en question.

Ici, pour chacun des premier 20 ; 20' et deuxième système de propulsion 30 ; 30', le nombre N de propulseurs d'augmentation de portance 23a, 23b, 23c, 23d, 33a, 33b, 33c, 33d est égal à quatre.

Le turbopropulseur 21 du premier système de propulsion 20 ; 20' est situé à gauche du fuselage 11, tandis que le turbopropulseur 31 du deuxième système de propulsion 30 ; 30' est situé à droite du fuselage 11. En l'occurrence, ces turbopropulseurs sont fixés aux ailes gauche et droite 12, 13 de l'aéronef.

La propulsion de l'aéronef 1 ; 2 ; 3 ; 4, réalisée à la fois au moyen de turbopropulseurs 12, 13 et au moyen de propulseurs électriques 22, 23a, 23b, 23c, 23d, 32, 33a, 33b, 33c, 33d, est donc une propulsion hybride.

Parmi les différents propulseurs de l'aéronef, les propulseurs de bout d'aile 22, 32 sont ceux qui sont situés le plus près des bouts des ailes 12, 13 de l'aéronef (c'est-à-dire le plus près des extrémités libres 120, 130 de ces ailes). Ils peuvent par exemple être positionnés de manière à ce que leur axe moteur soit situé à une distance de l'extrémité libre 120, 130 de l'aile considérée qui est inférieure au diamètre de l'hélice 220, 320 de ce propulseur, voire inférieure au rayon de cette hélice. L'hélice 220, 320 de ce propulseur peut être débordante de l'aile (l'axe du propulseur étant alors aligné avec l'extrémité libre 120, 130 de l'aile, par exemple).

Les propulseurs de bout d'aile 22, 32 permettent de réduire la trainée de bout d'aile, due à la formation d'un tourbillon marginal en bout d'aile. Il est prévu ici, lors d'un vol typique de l'aéronef, de faire fonctionner ces propulseurs pendant la majeure partie du vol. Leurs sens de rotation respectifs sont choisis de manière à s'opposer au tourbillon de bout d'aile, qui se forme au bout l'aile 12, 13 sur laquelle ils sont montés.

Quant aux propulseurs d'augmentation de portance 23a, 23b, 23c, 23d, 33a, 33b, 33c, 33d, ils sont répartis le long des ailes 12, 13 de l'aéronef, entre les propulseurs de bout d'aile 22, 32 et le fuselage 11. Ici, les propulseurs d'augmentation de portance sont plus précisément répartis entre les propulseurs de bout d'aile 22, 32 et les turbopropulseurs 21, 31.

Les propulseurs d'augmentation de portance permettent, en modifiant l'écoulement d'air sur et sous les ailes 12, 13 de l'aéronef, d'augmenter la portance de l'aéronef (ce qui explique d'ailleurs qu'ils soient positionnés en plein sur l'aile considérée, et non à son extrémité). Tel que représentés sur les figures, les propulseurs d'augmentation de portance entrainent des hélices qui sont situées chacune en amont du bord d'attaque de la voilure de l'aéronef. En variante, ces hélices pourraient toutefois être situées en aval (ou au droit) de ce bord d'attaque, par exemple sous la voilure en question. Il est prévu ici, lors d'un vol typique de l'aéronef, de faire fonctionner les propulseurs d'augmentation de portance principalement en phase de décollage, d'approche, et d'atterrissage, ainsi que lors du roulage pour le déplacement au sol (ou « taxi » en anglais). Il est prévu que ces propulseurs soient éteints pendant la majeure partie des phases de montée et de croisière (même s'ils peuvent être mis en fonction pendant une courte durée, lors de ces phases, par exemple pour permettre une augmentation rapide d'altitude).

Tel que représenté, l'aéronef 1 ; 2 ; 3 ; 4 comprend quatre propulseurs d'augmentation de portance 23a - 23d, 33a - 33d sur chaque aile 12, 13. En variante, chaque aile de l'aéronef pourrait toutefois être pourvue d'un nombre différent de propulseurs d'augmentation de portance (par exemple, le nombre N de propulseurs d'augmentation de portance qui équipent chaque aile pourrait être égal à 1, 2 ou 3 ou encore être supérieur à 4).

Dans les modes de réalisation représentés, les différents propulseurs électriques 22, 23a, 23b, 23c, 23d, 32, 33a, 33b, 33c, 33d sont répartis, c'est-à-dire distribués le long des ailes 12, 13 de l'aéronef. Dans d'autres modes de réalisation non représentés, l'aéronef pourrait toutefois comprendre en outre un ou des propulseurs électriques situés ailleurs que sur les ailes, par exemple à l'arrière du fuselage.

Maintenant que l'agencement d'ensemble de l'aéronef 1 ; 2 ; 3 ; 4 et des propulseurs a été présenté, on peut décrire le système de distribution d'électricité particulier, mis en oeuvre dans l'aéronef pour alimenter les propulseurs électriques 22, 23a, 23b, 23c, 23d, 32, 33a, 33b, 33c, 33d.

Les différences entre les premier, deuxième, troisième et quatrième modes de réalisation concernent principalement ce système de distribution d'électricité. En l'occurrence, par rapport à l'aéronef 1 du premier mode de réalisation, l'aéronef 2 ; 3 ; 4 du deuxième, troisième ou quatrième mode de réalisation met en oeuvre des dispositions supplémentaires de redondance et/ou de croisement gauche-droite entre les deux systèmes de propulsion 20, 30 ; 20', 30', grâce auxquelles une poussée relativement symétrique peut être conservée même en cas de dysfonctionnement du turbopropulseur gauche 21 ou du turbopropulseur droit 31.

De nombreuses caractéristiques techniques sont néanmoins communes à ces différents modes de réalisation. Aussi, d'un mode de réalisation à l'autre, les éléments identiques ou correspondant seront autant que possible repérés par les mêmes signes de références, et ne seront pas nécessairement décrits à chaque fois.

Les systèmes de propulsion de l'aéronef, et en particulier la manière d'alimenter les propulseurs électriques 22, 23a, 23b, 23c, 23d, 32, 33a, 33b, 33c, 33d sont maintenant décrits plus en détail, mode de réalisation par mode de réalisation.

Dans le premier mode de réalisation (figure 1), les propulseurs 21, 22, 23a, 23b, 23c, 23d du premier système de propulsion 20 sont situés à gauche du fuselage 11, tandis que les propulseurs 31, 32, 33a, 33b, 33c, 33d du deuxième système de propulsion 30 sont situés à droite du fuselage 11.

En plus de ses propulseurs et de sa génératrice 24 de courant alternatif, le premier système de propulsion 20 (système de propulsion gauche) comprend :
- un premier circuit 25 d'alimentation, qui relie électriquement sa génératrice 24 à son propulseur de bout d'aile 22, pour l'alimenter en électricité, et
- un deuxième circuit 26 d'alimentation, qui relie électriquement sa génératrice 24 à ses différents propulseurs d'augmentation de portance, 23a, 23b, 23c, 23d, pour pouvoir les alimenter électriquement.

Le premier circuit 25 d'alimentation et le deuxième circuit 26 d'alimentation sont tous deux des circuits d'alimentation « AC » (ou « Alternative Curent » en anglais), en ce sens qu'ils délivrent chacun un courant électrique d'alimentation de type alternatif, permettant d'alimenter les moteurs à courant alternatif des propulseurs électriques de l'aéronef.

Néanmoins, de manière remarquable, le deuxième circuit d'alimentation 26 comprend :
- un étage intermédiaire 260 de distribution de courant continu,
- un convertisseur de courant alternatif-continu, 261, qui relie électriquement la génératrice 24 à l'étage intermédiaire 260 de distribution de courant continu, et
- pour chaque propulseur d'augmentation de portance 23a, 23b, 23c, 23d, un convertisseur de courant continu-alternatif 263a, 263b, 263c, 263d, du type onduleur, qui relie électriquement le propulseur d'augmentation de portance considéré à l'étage intermédiaire 260 de distribution de courant continu.

Une conversion intermédiaire, sous la forme de courant continu (DC), est donc réalisée entre la génératrice 24, qui fournit un courant alternatif (AC), et les propulseurs d'augmentation de portance 23a, 23b, 23c, 23d, qui sont équipés de moteurs électriques 231a, 231b, 231c, 231d, également à courant alternatif.

Au contraire, le premier circuit 25 d'alimentation est configuré pour délivrer au propulseur de bout d'aile 22 un courant alternatif produit par la génératrice 24, sans conversion intermédiaire de ce courant alternatif sous la forme d'un courant continu.

Le premier circuit 25 d'alimentation est donc dépourvu d'un convertisseur de courant alternatif-continu ou continu-alternatif.

Le premier circuit 25 d'alimentation peut toutefois comprendre, comme ici, un ou plusieurs contacteurs ou interrupteurs commandés, et un ou des dispositifs de protection (protection contre des surtensions, par exemple), non représentés. On notera toutefois que ces derniers dispositifs ne sont pas des convertisseurs de courant ou de tension. En effet, ils permettent d'établir, ou de suspendre, une liaison électrique entre différents éléments d'un circuit, mais ils ne permettent pas de transformer l'amplitude (ou la valeur), la forme d'onde, la nature continue ou alternative, ou la fréquence d'un courant ou d'une tension électrique.

Ici, le moteur 221 du propulseur de bout d'aile 22 est un moteur à courant alternatif, de type synchrone. Le premier circuit d'alimentation 25 est donc muni d'un dispositif de démarrage et synchronisation 251, connecté entre ce moteur et la génératrice 24, pour permettre à ce moteur de démarrer. Dans d'autres modes de réalisation, pour lesquels le moteur du propulseur de bout d'aile serait un moteur de type asynchrone, ce dispositif de démarrage et de synchronisation pourrait être omis. Dans ce dernier cas, le premier circuit d'alimentation serait alors dépourvu de tout type de convertisseur de courant ou de tension.

Le premier circuit 25 d'alimentation et le deuxième circuit 26 d'alimentation sont reliés l'un à l'autre par un étage de distribution de courant alternatif 27, commun à ces deux circuits d'alimentation 25 et 26. Cet étage de distribution est réalisé au moyen de contacteurs, de dispositifs de protections, de barres bus (ou « bus bar » en anglais, c'est-à-dire de conducteurs électriques, de courants forts, réalisés sous la forme de barres ou de plaques conductrices d'un seul tenant) et autres conducteurs ou connecteurs électriques.

La génératrice 24 est connectée, par exemple directement par des conducteurs électriques (sans dispositif intermédiaire), à l'étage de distribution de courant alternatif 27.

Le dispositif de démarrage et de synchronisation 251 du propulseur de bout d'aile 22 est lui aussi connecté à cet étage de distribution de courant alternatif 27 (par exemple connecté directement par des conducteurs électriques, sans dispositif intermédiaire).

Par ailleurs, le convertisseur de courant alternatif-continu 261 du deuxième circuit est connecté entre cet étage de distribution de courant alternatif 27, et l'étage intermédiaire 260 de distribution de courant continu.

On peut prévoir, comme ici, que ce convertisseur de courant alternatif-continu 261 soit réversible, autorisant à la fois un transfert de puissance électrique depuis l'étage de distribution de courant alternatif 27 vers l'étage intermédiaire 260 de distribution de courant continu, et inversement.

L'étage intermédiaire 260 de distribution de courant continu est réalisé, comme l'étage de distribution de courant alternatif 27, au moyen de contacteurs, de dispositifs de protections, de barres bus et autres conducteurs ou connecteurs électriques.

Les convertisseurs de courant continu-alternatif 263a, 263b, 263c, 263d, qui relient électriquement les propulseurs d'augmentation de portance 23a, 23b, 23c, 23d à l'étage intermédiaire 260 de distribution de courant continu, peuvent, comme ici, être réversibles, c'est-à-dire autoriser à la fois un transfert de puissance électrique depuis l'étage intermédiaire 260 de distribution de courant continu vers le propulseur d'augmentation de portance considéré, et inversement, depuis ce propulseur vers l'étage intermédiaire 260.

Par ailleurs, le deuxième circuit 26 d'alimentation est muni ici d'un dispositif de stockage d'énergie électrique, en l'occurrence une batterie ou d'un ensemble de batteries électriques 262, connecté à l'étage intermédiaire 260 de distribution de courant continu.

Pour ce qui est des aspects mécaniques, le propulseur de bout d'aile 22 est muni d'une ou plusieurs hélices, dont l'une au moins est à pas variable (c'est-à-dire une hélice dont le calage peut être ajusté, en cours de vol). Cette disposition est intéressante car le propulseur de bout d'aile 22 est destiné à fonctionner pendant la majeure partie du vol de l'aéronef, donc sur une gamme de vitesses de déplacement particulièrement étendue, et car sa vitesse de rotation est imposée par celle du turbopropulseur 21 (puisque le moteur 221 est de type synchrone, ici).

Quant aux propulseurs d'augmentation de portance 23a, 23b, 23c, 23d, ils sont munis ici d'hélices à pas fixes (c'est-à-dire dont le calage n'est pas réglable en cours de vol). Plus précisément, leur hélice, ou l'ensemble de leurs hélices s'ils en comprennent plusieurs, sont à pas fixe. Cela permet de simplifier avantageusement la structure de ces propulseurs, pour lesquels la vitesse de rotation peut être ajustée avec beaucoup plus de souplesse que pour le propulseur de bout d'aile 22 (grâce à la conversion intermédiaire sous forme de courant continu).

On notera que le terme « hélice » désigne ici, de manière générale, un organe de propulsion comprenant des pales solidaires d'un arbre, qu'il s'agisse d'une hélice carénée (parfois appelée « fan » en anglais) ou non carénée.

Le deuxième système de propulsion 30 (système de propulsion droit) est ici identique (ou tout au moins similaire) au premier système de propulsion 20. En plus de ses propulseurs 31, 32, 33a - 33d, et de sa génératrice 34 de courant alternatif, le deuxième système de propulsion 30 comprend donc :
- un premier circuit 35 d'alimentation, identique au premier circuit 25 qui été décrit plus haut, et
- un deuxième circuit 36 d'alimentation, identique au deuxième circuit 26.

Le premier circuit 35 comprend ainsi un étage de distribution de courant alternatif 37 (commun au deuxième circuit 36), et un dispositif de démarrage et synchronisation 351 connecté au propulseur de bout d'aile 32.

De plus, le deuxième circuit 36 comprend notamment :
- un étage intermédiaire 360 de distribution de courant continu,
- un convertisseur de courant alternatif-continu 361, ici réversible, connecté entre l'étage de distribution de courant alternatif 37 et l'étage intermédiaire 360 de distribution de courant continu,
- pour chaque propulseur d'augmentation de portance 33a - 33d, un convertisseur de courant continu-alternatif 363a - 363d, ici réversible, qui relie électriquement le moteur 331a - 331d (à courant alternatif) du propulseur d'augmentation de portance considéré, à l'étage intermédiaire 360 de distribution de courant continu, et
- un ensemble de batteries électriques 362 connecté à l'étage intermédiaire 360.

Le propulseur de bout d'aile 32 du deuxième système de propulsion 30 comprend (comme pour le premier système de propulsion) un moteur 321 à courant alternatif, ici de type synchrone, qui entraine une ou plusieurs hélices, dont l'une au moins, 320, est à pas variable.

Le premier système de propulsion 20 et le deuxième système de propulsion 30 comprennent par ailleurs une unité de commande électronique, 14, qui leur est commune, ici. Cette unité de commande 14 communique avec les moteurs, convertisseurs, contacteurs et autres actionneurs de ces deux systèmes de propulsion, et est apte à les commander.

L'unité de commande 14 est programmée ici pour commander les moteurs des propulseurs d'augmentation de portance 23a, 23b, 23c, 23d, 33a, 33b, 33c, 33d, de manière à ce que ces propulseurs délivrent une puissance mécanique de propulsion en phase de décollage, d'approche, d'atterrissage, et même en phase de déplacement au sol, ces propulseurs étant alimentés au moins en partie, ici entièrement, par les batteries électriques 262, 362, lors des phases de vol ou de déplacement en question.

Cette disposition permet de réduire l'émission de gaz polluants, lors de ces phases de vol et de déplacement, puisqu'une partie de la puissance nécessaire à la propulsion de l'aéronef est alors fournie par les batteries électriques 262, 362, ce qui permet de réduire d'autant la puissance que doivent fournir les turbopropulseurs pour faire décoller ou atterrir l'aéronef. On réduit ainsi avantageusement la pollution atmosphérique dans les zones aéroportuaires, et au voisinage de celles-ci.

L'unité de commande 14 est programmée aussi pour commander les moteurs des propulseurs d'augmentation de portance 23a, 23b, 23c, 23d, 33a, 33b, 33c, 33d de manière à ce que ces propulseurs restent éteints pendant la majeure partie de la phase de croisière, et même de montée, lors d'un vol de l'aéronef.

Cette disposition est intéressante en termes de consommation de carburant. En effet, pour faire fonctionner les propulseurs d'augmentation de portance 23a, 23b, 23c, 23d, 33a, 33b, 33c, 33d pendant l'ensemble d'une phase de croisière, il faudrait les alimenter en électricité au moyen des génératrices 24, 34, car les capacités de stockage des batteries électriques 262, 362 sont nécessairement limitées (pour éviter de trop alourdir l'aéronef), et car une part importante de la charge initiale de ces batteries est consommée en phase de décollage. Or, prélever une partie de la puissance mécanique produite par les turbines 211, 311 des turbopropulseurs 21, 31, pour la convertir sous forme électrique afin d'alimenter ensuite les propulseurs d'augmentation de portance est généralement plus consommateur que d'utiliser directement cette puissance mécanique pour entrainer les hélices des turbopropulseurs (en tout cas pour l'ensemble d'une phase de croisière, pendant laquelle l'altitude moyenne de l'aéronef est constante).

L'unité de commande 14 est programmée par ailleurs pour, pendant la majeure partie de la phase de croisière d'un vol de l'aéronef, voire aussi pendant la majeure partie de la phase de montée de ce vol, commander aux moteurs 221, 321 des propulseurs de bout d'aile 22, 32 de délivrer une puissance mécanique de propulsion.

L'unité de commande 14 peut même être programmée, comme ici, pour commander aux moteurs 221, 321 des propulseurs de bout d'aile 22, 32 de délivrer une puissance mécanique de propulsion pendant l'ensemble des phases de décollage, de montée, de croisière, et d'atterrissage de l'aéronef (pendant la phase de descente, les propulseurs de bout d'aile peuvent en revanche être commandés de manière à fonctionner en récepteurs de puissance mécanique, et donc en générateur électrique).

Ces dispositions sont intéressantes elles aussi en termes de consommation de carburant. En effet, même si la conversion mécanique-électrique (par les génératrices) puis électrique-mécanique (par les moteurs des propulseurs de bout d'aile) s'accompagne de pertes, les propulseurs de bout d'aile 22, 32 permettent une forte réduction de la trainée de bout d'aile, trainée qui concoure notablement à la trainée totale subie par l'aéronef.

On comprend toutefois l'importance de réduire au maximum les pertes de puissance dans les premiers circuits électriques 25, 35, qui relient les génératrices 24, 34 aux propulseurs de bout d'aile 22, 32, puisque ces propulseurs fonctionnent et délivrent une puissance mécanique de propulsion pendant la majeure partie du vol de l'aéronef. C'est d'ailleurs pour limiter au maximum ces pertes que l'on emploie une liaison électrique en quelque sorte directe, sans conversion alternatif-continu, entre les génératrices et les propulseurs de bout d'aile.

Pour résumer, l'architecture des premier et deuxième systèmes de propulsion 20, 30 permet :
- en faisant fonctionner les propulseurs de bout d'aile pendant la majeure partie du vol de l'aéronef, avec une liaison « directe » génératricepropulseur (sans conversion alternatif-continu), de diminuer la consommation globale en carburant sur l'ensemble de ce vol (notamment par rapport à un aéronef comprenant seulement des turbopropulseurs), et
- en alimentant les propulseurs d'augmentation de portance sur batteries lors des phases de décollage, d'atterrissage et de déplacement au sol (ce qui est rendu possible par la structure des deuxièmes circuits 26, 36, à étage intermédiaire DC), de réduire la pollution atmosphérique en zone aéroportuaire.

En outre, le fait d'alimenter les propulseurs d'augmentation de portance 23a - 23d, 33a - 33d via les étages intermédiaires 260, 360 de distribution de courant continu et les convertisseurs de courant continu-alternatif 263a - 263d, 363a - 363d permet de commander électriquement la vitesse de rotation de ces propulseurs avec beaucoup de souplesse (en particulier, de manière indépendante des vitesses de rotation des turbopropulseurs 21, 31). Cela permet notamment de s'affranchir d'hélices à pas variable, pour ces propulseurs, simplifiant ainsi leur structure.

Les étages intermédiaires 260, 360 de distribution de courant continu des deuxièmes circuits 26, 36, munis de batteries, et le caractère réversible des convertisseurs de courant continu-alternatif 263a - 263d, 363a - 363d, permettent par ailleurs, en phase de descente de l'aéronef, de récupérer une énergie mécanique (en faisant fonctionner les propulseurs d'augmentation de portance en récepteurs mécaniques - en quelque sorte comme des éoliennes, selon l'expression anglosaxonne de « windmilling ») et de stocker l'énergie récupérée sous forme électrique, dans les batteries électriques 262, 362, comme cela est expliqué plus bas.

Différents modes de fonctionnement des premier et deuxième systèmes de propulsion 20, 30, associés à différentes phases de vol ou de fonctionnement de l'aéronef vont maintenant être décrits plus en détail.

Ici, l'unité de commande 14 est programmée notamment pour piloter les premier et deuxième systèmes de propulsion 20, 30 de manière à mettre en oeuvre l'un ou l'autre de ces modes de fonctionnement (en fonction de la phase de vol de l'aéronef). En particulier, l'unité de commande 14 peut être programmée de manière à :
- sélectionner l'un ou l'autre de ces modes de fonctionnement en fonction de données reçues par cette unité de commande, représentatives de la phase de vol en cours (cette donnée spécifiant par exemple que la phase en cours est une phase de décollage, ou au contraire une phase de croisière) et/ou représentative d'un choix de pilotage d'un pilote de l'aéronef ou d'un ordinateur de bord de l'aéronef et/ou représentative d'un état de l'aéronef (par exemple d'un état de charge de ses batteries de propulsion 262, 362), et
- commander les différents actionneurs (moteurs, convertisseurs, contacteurs ...) des systèmes de propulsion 20, 30 conformément au mode de fonctionnement ainsi sélectionné.

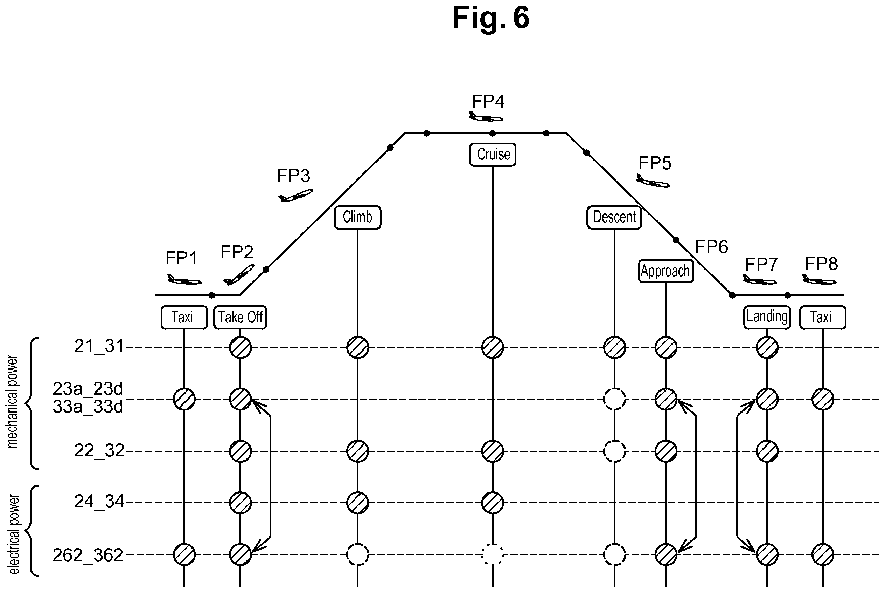

La figure 6 représente schématiquement différentes phases d'un vol typique de l'aéronef 1, référencées FP1 à FP8, en fonction du temps t. La figure 6 montre aussi, à la manière d'un chronogramme, pour les différents propulseurs de l'aéronef, les phases pendant lesquelles chacun de ces propulseurs est moteur (et éventuellement récepteur), lors de ce vol.

Comme on peut le voir sur cette figure, le vol en question comprend successivement (dans cet ordre) :
- une phase de déplacement au sol FP1 (« taxi »),
- une phase de décollage FP2,
- une phase de montée FP3,
- une phase de croisière FP4,
- une phase de descente FP5,
- une phase d'approche FP6,
- une phase d'atterrissage FP7, et
- une autre phase de roulage pour le déplacement au sol FP8.

Sur la figure 6, pour chaque phase, et pour chaque propulseur, un disque gris indique que le propulseur considéré fonctionne en « moteur », c'est-à-dire fournit une puissance mécanique de propulsion, lors de la phase en question. Un disque blanc (c'est-à-dire un cercle noir, éventuellement en pointillés ou en tirets, rempli de blanc) indique au contraire que le propulseur fonctionne en récepteur de puissance mécanique (en génératrice), lors de la phase en question, tandis qu'une absence de disque indique le propulseur est éteint (n'échange pas d'énergie) pendant la majeure partie de cette phase.

Une convention similaire est employée pour les sources d'énergie électrique, c'est-à-dire les génératrices 24, 34 et les batteries électriques 262, 362. Un disque gris indique que la source considérée débite, pendant la phase de vol ou de déplacement considérée, un disque blanc indique que cette source reçoit une puissance électrique (positive), et une absence de disque indique que cette source ne débite pas et ne reçoit pas de puissance électrique.

Pour certaines phases (phase de montée FP3 et phase de descente FP5), un disque entouré par une ligne en tirets indique que l'échange d'énergie associé est optionnel (ou qu'il peut n'avoir lieu que pendant une partie de la phase considérée).

Pour la phase de croisière FP4, le disque blanc entouré par une ligne pointillée indique que l'échange d'énergie en question (recharge des batteries électriques) n'a lieu que pendant une partie de la phase de croisière.

Les modes de fonctionnement associés à ces différentes phases de vol sont maintenant décrits un par un.

Dans le mode de fonctionnement correspondant à la phase de roulage pour le déplacement au sol FP1, ou FP8, le déplacement de l'aéronef 1 est assuré par les propulseurs d'augmentation de portance 23a - 23d, 33a - 33d, alimentés électriquement par les batteries électriques 262, 362. Quant aux turbopropulseurs 21, 31 et propulseurs de bout d'aile 22, 32, ils sont éteints, dans ce mode de fonctionnement.

Dans le mode de fonctionnement correspondant à la phase de décollage FP2, les différents propulseurs de l'aéronef, 21, 22, 23a - 23d, 31, 32, 33a - 33d participent à sa propulsion. Les propulseurs d'augmentation de portance 23a - 23d, 33a - 33d sont alimentés électriquement par les batteries électriques 262, 362 et éventuellement aussi par les génératrices. Les propulseurs de bout d'aile 22, 32 sont alimentés électriquement par les génératrices 24, 34 (entrainées par les turbopropulseurs).

Dans le mode de fonctionnement correspondant à la phase de montée FP3, la propulsion de l'aéronef est assurée par les turbopropulseurs 21, 31, et par les propulseurs de bout d'aile 22, 32 qui sont alimentés électriquement par les génératrices 24, 34. Quant aux propulseurs d'augmentation de portance 23a - 23d, 33a - 33d, ils sont éteints. Dans ce mode de fonctionnement, les batteries électriques (vidées en partie lors du décollage) sont rechargées par les génératrices de manière optionnelle, ou, tout au moins, ces batteries ne débitent pas.

Dans le mode de fonctionnement correspondant à la phase de croisière FP4, la propulsion de l'aéronef est assurée par les turbopropulseurs 21, 31, et par les propulseurs de bout d'aile 22, 32 qui sont alimentés électriquement par les génératrices 24, 34. Quant aux propulseurs d'augmentation de portance 23a - 23d, 33a - 33d, ils sont éteints (sauf éventuellement lors de brèves phases de changement d'altitude). Dans ce mode de fonctionnement, les batteries électriques (vidées en partie lors du décollage) sont rechargées par les génératrices, puis, une fois ces batteries pleines, elles n'interviennent plus dans les échanges d'énergie. On peut aussi prévoir, lors de la phase de croisière ou de montée, de cesser le rechargement des batteries avant qu'elles n'atteignent leur charge maximale afin de conserver une marge de stockage, pour, lors de la descente, pouvoir stocker sous forme électrique une énergie mécanique récupérée par les propulseurs électriques fonctionnant en récepteurs.

Dans le mode de fonctionnement correspondant à la phase de descente FP5, la propulsion de l'aéronef est assurée ici par les turbopropulseurs 21, 31. Pendant une partie au moins de la descente, il est prévu ici que les propulseurs de bout d'aile 22, 32 et les propulseurs d'augmentation de portance 23a - 23d, 33a - 33d fonctionnent en récepteurs, de manière optionnelle, et que l'énergie qu'ils récupèrent soit stockée dans les batteries. Cette récupération d'énergie sous forme électrique est rendue possible notamment par le caractère réversible des convertisseurs de courant continu-alternatif 263a - 263d, 363a - 363d. Pendant toute cette période, les génératrices 24, 34 ne débitent pas. Pendant la descente, lorsque les propulseurs électriques ne fonctionnent pas en tant que récepteurs (par exemple parce que les batteries sont pleines), il est prévu ici de ne pas leur fournir d'énergie électrique.

Dans le mode de fonctionnement correspondant à la phase d'approche FP6, et à la phase d'atterrissage FP7, les différents propulseurs de l'aéronef, 21, 22, 23a - 23d, 31, 32, 33a - 33d participent à sa propulsion. Pendant ces phases, les propulseurs d'augmentation de portance 23a - 23d, 33a - 33d sont alimentés électriquement par les batteries électriques 262, 362 et éventuellement aussi par les génératrices. Les propulseurs de bout d'aile 22, 32 sont alimentés quant à eux par les génératrices 24, 34 (entrainées par les turbopropulseurs). Lors de cette phase, les propulseurs d'augmentation de portance 23a - 23d, 33a - 33d peuvent participer à la génération de poussée inverse pour le freinage de l'aéronef. Tandis que les propulseurs de bout d'aile 22 et 32 peuvent permettre de compenser en partie la poussée pour contrôler et/ou augmenter la capacité de manoeuvre de l'aéronef, notamment en cas de vent de travers (crosswind) ou de perturbation par des mouvements d'air parasites.

Ces différents modes de fonctionnement, et les phases de vol auxquelles ils sont associés sont décrits à titre d'exemple, et différentes modifications peuvent y être apportées.

Ainsi, on pourrait prévoir par exemple que les propulseurs de bout d'aile 22, 32 soient alimentés électriquement par les génératrices 24, 34, pendant la phase de descente, ou pendant une partie de cette phase.

On pourrait aussi prévoir que les propulseurs de bout d'aile 22, 32 soient alimentés électriquement par les génératrices 24, 34, ou éventuellement être éteints, en phase d'approche et d'atterrissage.

L'unité de commande 14 peut aussi être programmée pour mettre en oeuvre un mode de fonctionnement spécifique, de démarrage des propulseurs de bout d'aile 22, 32. Dans ce mode de fonctionnement, les propulseurs de bout d'aile 22, 32 sont démarrés (au sol) ou redémarrés (en vol) grâce aux batteries électriques 262, 362 (et grâce au caractère réversible des convertisseurs 261, 361). Cette disposition est intéressante car elle permet de simplifier le dispositif de démarrage et de synchronisation 251, 351 (ou la structure des moteurs de ces propulseurs). En effet, en faisant démarrer les moteurs des propulseurs de bout d'aile 22, 32, ici de type synchrone, grâce aux batteries électriques 262, 362 aux convertisseurs 261, 361, on élimine le problème de synchronisation au démarrage entre ces moteurs et les génératrices 24, 34. Et une fois que la vitesse de rotation de ces moteurs est proche de celle des génératrices, on bascule sur une alimentation par les génératrices.

L'unité de commande 14 peut être programmée aussi pour mettre en oeuvre un autre mode de fonctionnement spécifique, de démarrage des turbopropulseurs 21, 31, lorsque les génératrices 24, 34 sont réversibles et peuvent fonctionner en tant que moteurs (en tant que démarreurs électriques). Dans ce cas, les génératrices sont alimentées électriquement par les batteries électriques 262, 362, grâce au caractère réversible des convertisseurs 261, 361, de manière à faire démarrer les turbopropulseurs.

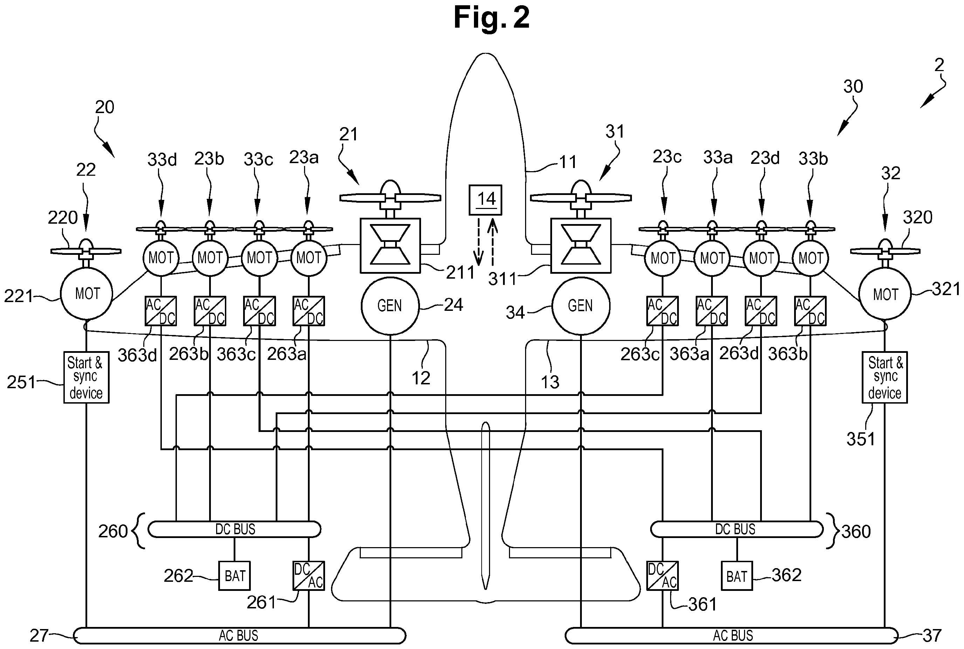

L'aéronef 2 selon le deuxième mode de réalisation (figure 2) diffère de l'aéronef 1 du premier mode de réalisation (figure 1) en ce que :
- certains propulseurs d'augmentation de portance 23c, 23d du premier système de propulsion 20 sont fixés à l'aile droite 13 de l'aéronef 2, alors que les autres propulseurs 21, 23a, 23b, 22 de ce premier système 20 sont fixés à son aile gauche 12 (alors que dans le premier mode de réalisation, tous les propulseurs du premier système de propulsion sont fixés à la même aile, gauche), et en ce que
- certains propulseurs d'augmentation de portance 33c, 33d du deuxième système de propulsion 30 sont fixés à l'aile gauche 12 de l'aéronef 2, alors que les autres propulseurs 31, 33a, 33b, 32 de ce deuxième système 30 sont fixés à son aile droite 13 (alors que dans le premier mode de réalisation, tous les propulseurs du premier système de propulsion sont fixés à la même aile, gauche),

En l'occurrence, pour chacun de ces deux systèmes de propulsion 20, 30, parmi les quatre propulseurs d'augmentation de portance du système de propulsion considéré, deux sont fixés sur l'aile droite 13, et deux sont fixés sur l'aile gauche 12, de manière à ce que ces quatre propulseurs 23a - 23d, ou 33a - 33d, forment un ensemble symétrique par rapport à un plan sagittal médian de l'aéronef 2 (symétrie gauche-droite, y compris pour la position des propulseurs par rapport au fuselage).

Cette disposition peut être mise en oeuvre de la même manière lorsque le nombre N de propulseurs d'augmentation de portance de chaque aile est un nombre différent de 4, le nombre N étant de préférence un nombre pair (par exemple égal à 2 ou à 6). Dans ce cas, pour chacun des deux systèmes de propulsion, N/2 propulseurs d'augmentation de portance sont fixés sur l'aile gauche tandis que les N/2 autres propulseurs d'augmentation de portance sont fixés sur l'aile droite, de préférence de manière symétrique par rapport aux N/2 propulseurs de l'aile gauche.

Cette sorte de croisement gauche-droite entre les deux systèmes de propulsion 20, 30 permet, en cas de dysfonctionnement du turbopropulseur gauche 21 ou du turbopropulseur droit 31, d'éviter une trop grande dissymétrie entre les portances et poussées exercées respectivement du côté gauche, et du côté droit de l'aéronef 2.

En effet, si le turbopropulseur droit 31 devient inopérant (ne tourne plus), par exemple, il sera encore possible, grâce à ce « croisement » gauche-droite, d'alimenter électriquement une partie des propulseurs de l'aile droite (les propulseurs 23c, 23d), avec la génératrice de gauche, 24. Ainsi, l'aéronef pourra être propulsé, à gauche, par le turbopropulseur gauche 21 et les propulseurs électriques 22, 23a et 23b, et, à droite, par les propulseurs électriques 23c et 23d (et cela même lorsque les batteries électriques 362 sont vides), évitant ainsi une trop forte dissymétrie de poussée entre la gauche et la droite de l'aéronef.

Pour le reste, l'aéronef 2 du deuxième mode de réalisation est identique à l'aéronef 1 du premier mode de réalisation.

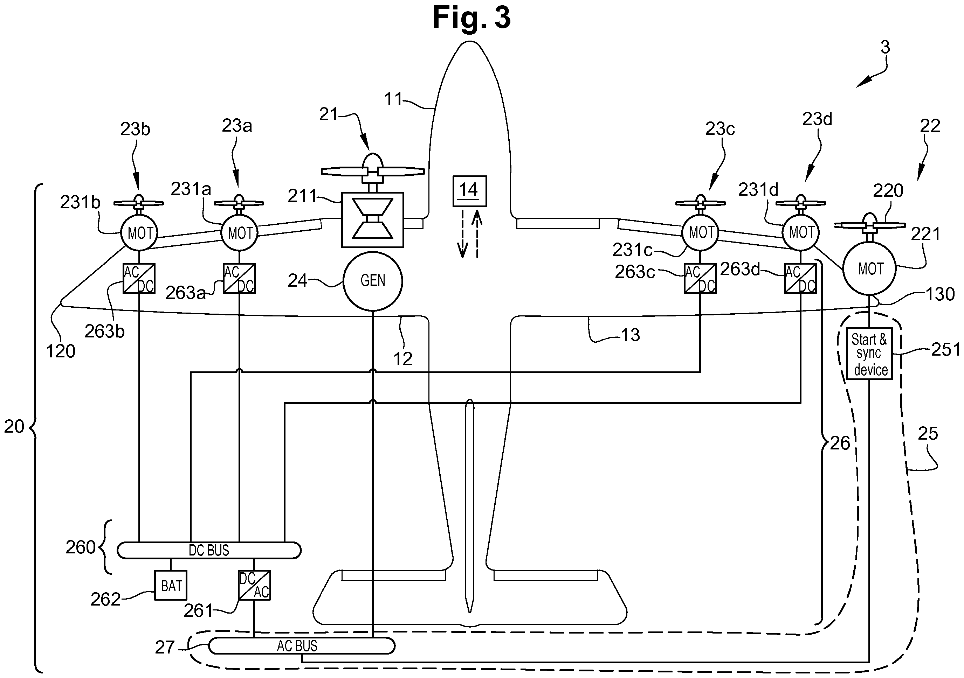

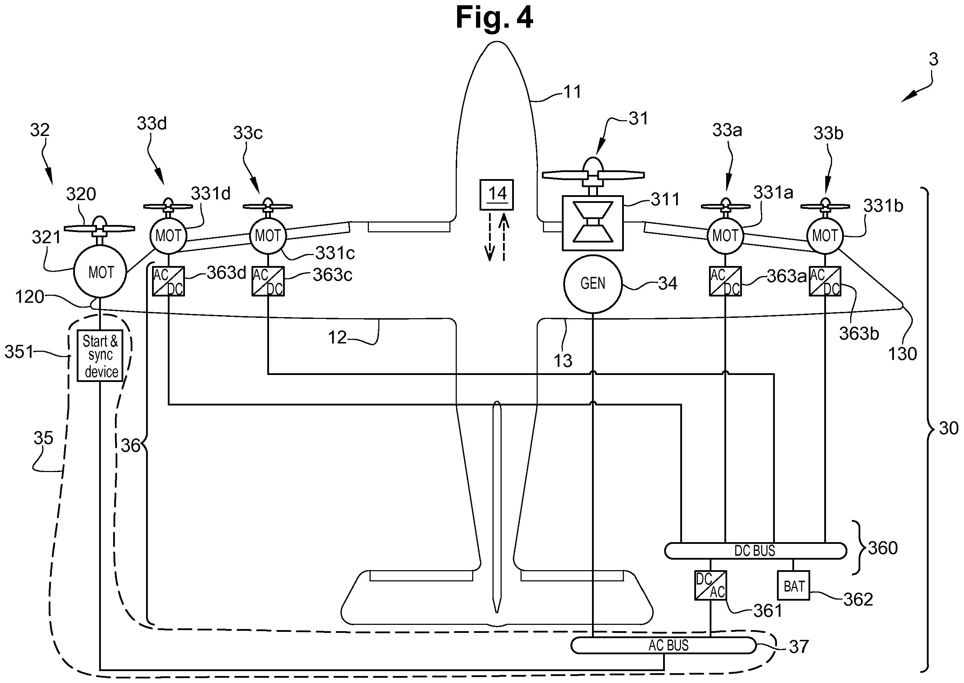

L'aéronef 3 selon le troisième de réalisation (figures 3 et 4) est identique à l'aéronef 2 du deuxième mode de réalisation (figure 2), si ce n'est que, dans ce troisième mode de réalisation :
- le propulseur de bout d'aile 22 du premier système de propulsion 20 (système de « gauche ») est fixé au bout de l'aile droite 13,
- tandis que le propulseur de bout d'aile 32 du deuxième système de propulsion 30 (système de « droite ») est fixé au bout de l'aile gauche 12.

Pour plus de clarté, sur la figure 3, on a représenté l'aéronef 2 et son premier système de propulsion 20, mais sans représenter le deuxième système de propulsion 30. Et sur la figure 4, on a représenté l'aéronef 2 et son deuxième système de propulsion 30, mais sans représenter le premier système de propulsion 20.

Dans ce troisième mode de réalisation, le « croisement » gauche-droite entre les premier et deuxième systèmes de propulsion concerne donc un nombre de propulseurs plus important que dans le deuxième mode de réalisation, ce qui permet d'améliorer encore la symétrie gauche-droite de la poussée (et de la portance), dans un cas où l'un des turbopropulseurs 21, 31 deviendrait inopérant.

Ainsi, si le turbopropulseur 31 devient inopérant, par exemple, la propulsion de l'aéronef pourra encore être assurée : à gauche, par le turbopropulseur gauche 21 et les propulseurs électriques 23a et 23b, et, à droite, par les propulseurs électriques 23c, 23d, et 22.

On notera que l'aéronef pourrait être réalisé selon un autre mode de réalisation, non représenté, dans lequel
- le propulseur de bout d'aile du premier système de propulsion (système de « gauche ») serait fixé au bout de l'aile droite, tandis que le propulseur de bout d'aile du deuxième système de propulsion (système de « droite ») serait fixé au bout de l'aile gauche (comme dans le troisième mode de réalisation),
- mais dans lequel l'ensemble des propulseurs d'augmentation de portance du premier système serait situé à gauche du fuselage, tandis que l'ensemble des propulseurs d'augmentation de portance du deuxième système serait situé à droite du fuselage.

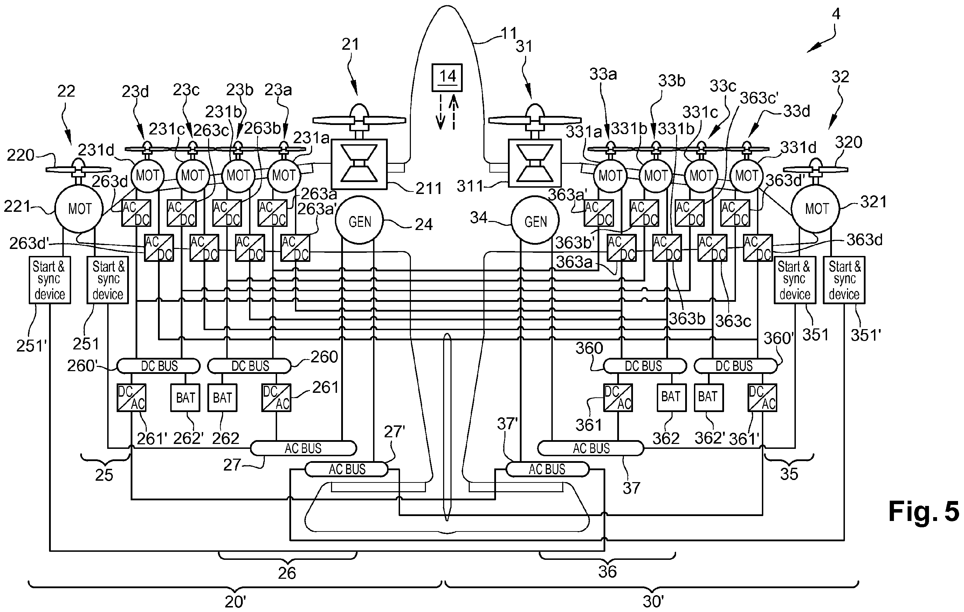

Dans le quatrième mode de réalisation de l'aéronef 4 (figure 5), chaque propulseur électrique comprend deux entrées (plus précisément deux ensembles de bornes d'entrée), ce qui permet d'alimenter électriquement ce propulseur soit avec l'une, soit avec l'autre de ces deux entrées. L'une de ces deux entrées est reliée électriquement à la génératrice 24 du premier système de propulsion 20' tandis que l'autre entrée est reliée électriquement à la génératrice 34 du deuxième système de propulsion 30', de manière à pouvoir alimenter électriquement le propulseur considéré soit par l'une soit par l'autre de ces deux génératrices 24, 34.

Grâce à cette disposition, même si l'un des turbopropulseurs devient inopérant, l'ensemble des propulseurs électriques de l'aéronef 4 peuvent encore être alimentés électriquement, par la génératrice de l'autre propulseur, ce qui permet de conserver une poussée (et une portance) relativement symétrique entre la gauche et la droite de l'aéronef (et cela même si les batteries électriques sont vides).

Par ailleurs, pour le premier, comme pour le deuxième système de propulsion 20', 30', l'étage de distribution de courant alternatif 27, 37, l'étage intermédiaire 260, 360 de distribution de courant continu, les batteries électriques 262, 362 et les convertisseurs 261, 263a - 263d, 361, 363a - 363d du système de propulsion sont doublés. Cette redondance améliore encore la fiabilité de l'aéronef.

En plus des éléments mentionnés ci-dessus, le premier système de propulsion 20' comprend donc (figure 5) :
- un étage de distribution de courant alternatif additionnel 27',
- un étage intermédiaire additionnel 260', de distribution de courant continu,
- une ou des batteries électriques additionnelles 262',
- un convertisseur de courant alternatif-continu additionnel 261',
- pour chaque propulseur d'augmentation de portance 23a - 23d, un convertisseur de courant continu-alternatif additionnel 263a' - 263d', et
- un dispositif de démarrage et synchronisation additionnel 251'.

De la même manière, le deuxième système de propulsion 30' comprend, en plus des éléments déjà mentionnés :
- un étage de distribution de courant alternatif additionnel 37',
- un étage intermédiaire additionnel 360', de distribution de courant continu,
- une ou des batteries électriques additionnelles 362',
- un convertisseur de courant alternatif-continu additionnel 361',
- pour chaque propulseur d'augmentation de portance 33a - 33d, un convertisseur de courant continu-alternatif additionnel 363a' - 363d', et
- un dispositif de démarrage et synchronisation additionnel 351'.

Pour chaque propulseur d'augmentation de portance 23a - 23d, 33a - 33d, l'une des deux entrées du propulseur est connectée au convertisseur de courant continu-alternatif 263a - 263d, 363a - 363d tandis que l'autre entrée est connectée au convertisseur de courant continu-alternatif additionnel 263a' - 263d', 363a' - 363d'.

Pour chaque propulseur de bout d'aile 22, 32, l'une des deux entrées du propulseur est connectée au dispositif de démarrage et synchronisation 251, 351 tandis que l'autre entrée est connectée au dispositif de démarrage et synchronisation additionnel 251', 351'.

Comme précédemment, dans le premier système de propulsion 20', l'étage de distribution de courant alternatif 27 est connecté, d'une part à la génératrice 24, et d'autre part à l'étage intermédiaire 260 de distribution de courant continu (via le convertisseur 261) ainsi qu'au propulseur de bout d'aile 22 de l'aile gauche (via le dispositif de démarrage 251). L'étage intermédiaire DC, 260, alimente deux propulseurs d'augmentation de portance 23a, 23b de l'aile gauche 12, et deux propulseurs d'augmentation de portance 33a, 33b de l'aile droite (via les convertisseurs 263a, 263b, 363a', 363b').

L'étage de distribution de courant alternatif additionnel 27' est connecté lui aussi à la génératrice 24. Il est connecté par ailleurs au propulseur de bout d'aile 32 de l'aile droite 13 (via le dispositif de démarrage et synchronisation additionnel 351') ainsi qu'à l'étage intermédiaire additionnel DC, 360' (via le convertisseur AC-DC additionnel 361').

L'étage intermédiaire additionnel DC 260' est relié quant à lui à l'étage de distribution AC additionnel 37' du deuxième système de propulsion 30', via le convertisseur AC-DC additionnel 261'. L'étage intermédiaire additionnel DC 260' alimente électriquement deux propulseurs d'augmentation de portance 23c, 23d de l'aile gauche 12, et deux propulseurs d'augmentation de portance 33c, 33d de l'aile droite (via les convertisseurs 263c, 263d, 363c', 363d').

Le dispositif de démarrage additionnel 251' du propulseur de bout d'aile 22 de l'aile gauche est relié lui aussi à l'étage de distribution AC additionnel 37' du deuxième système de propulsion.

Les éléments du deuxième système de propulsion 30' sont connectés entre eux, et à ceux du premier système de propulsion 20', de la même manière que ce qui vient d'être présenté pour le premier système 20'.

Ainsi, dans le deuxième système de propulsion 30', l'étage de distribution de courant alternatif 37 est connecté, d'une part à la génératrice 34, et d'autre part à l'étage intermédiaire 360 de distribution de courant continu (via le convertisseur 361) ainsi qu'au propulseur de bout d'aile 32 de l'aile droite (via le dispositif de démarrage 351). L'étage intermédiaire DC, 360, alimente deux propulseurs d'augmentation de portance 23a, 23b de l'aile gauche 12, et deux propulseurs d'augmentation de portance 33a, 33b de l'aile droite (via les convertisseurs 263a', 263b', 363a, 363b).

L'étage de distribution de courant alternatif additionnel 37' est connecté à la génératrice 34. Il est connecté par ailleurs au propulseur de bout d'aile 22 de l'aile gauche 12 (via le dispositif de démarrage et synchronisation additionnel 251') ainsi qu'à l'étage intermédiaire additionnel DC, 260' (via le convertisseur AC-DC additionnel 261').

L'étage intermédiaire additionnel DC 360' est relié quant à lui à l'étage de distribution AC additionnel 27' du premier système de propulsion, via le convertisseur AC-DC additionnel 361'. L'étage intermédiaire additionnel DC 360' alimente électriquement deux propulseurs d'augmentation de portance 23c, 23d de l'aile gauche 12, et deux propulseurs d'augmentation de portance 33c, 33d de l'aile droite (via les convertisseurs 263c', 263d', 363c, 363d).

Différentes variantes peuvent être apportées aux modes de réalisation qui viennent d'être décrits, en plus de celles déjà mentionnées, et d'autres modes de réalisation de l'aéronef, ou des systèmes de propulsion peuvent être envisagés.

Par exemple, les premier et deuxième systèmes de propulsion pourraient comprendre une turbine non-propulsive, au lieu d'un turbopropulseur, la génératrice de chaque système de propulsion étant alors entraînée par la turbine (non propulsive) de ce système. La manière de piloter les systèmes de propulsion serait alors différente de ce qui a été présenté plus haut (en référence à la figure 6). En effet, du fait de l'absence de turbopropulseur, on serait amené dans ce cas à faire fonctionner les propulseurs d'augmentation de portance pendant une partie importante des phases de montée ou de croisière (voire pendant la totalité de ces phases).

Par ailleurs, au lieu d'équiper un aéronef avec deux systèmes de propulsions tels que décrits plus haut, pourvus chacun d'une turbine, on pourrait équiper un aéronef avec un seul système de propulsion, comprenant :
- exactement une turbine, qui est par exemple la turbine d'un turbopropulseur situé à l'avant du fuselage,
- deux propulseurs de bout d'aile, l'un fixé au bout de l'aile gauche et l'autre fixé au bout de l'aile droite,
- et, sur chaque aile, un ou des propulseurs d'augmentation de portance, situés entre le fuselage et le propulseur de bout d'aile de cette aile.

Dans ce dernier système de propulsion, les deux propulseurs de bout d'aile seraient reliés à la génératrice (unique) de manière à pouvoir être alimentés par celle-ci sans conversion intermédiaire alternatif-continu, comme précédemment. Et les propulseurs d'augmentation de portance seraient au contraire reliés à cette génératrice par l'intermédiaire de convertisseurs alternatif-continu et continu alternatif, et via un ou des étages intermédiaires de distribution de courant continu muni de batteries électriques.

## Revendications

1. Système de propulsion (20, 30 ; 20', 30') pour un aéronef (1 ; 2 ; 3 ; 4) à voilure fixe comprenant :
- une génératrice (24, 34) de courant alternatif,
- au moins un propulseur de bout d'aile (22, 32) comprenant un moteur (221, 321) à courant alternatif, ayant un sens de rotation qui s'oppose à la formation des tourbillons marginaux de bout d'aile,
- au moins un propulseur d'augmentation de portance (23a, 23b, 23c, 23d, 33a, 33b, 33c, 33d), comprenant un moteur à courant alternatif,
- un premier circuit (25, 35) d'alimentation AC, qui relie électriquement la génératrice (24, 34) au propulseur de bout d'aile (22, 32), et
- un deuxième circuit (26, 36) d'alimentation AC, qui relie électriquement la génératrice (24, 34) au propulseur d'augmentation de portance (23a, 23b, 23c, 23d, 33a, 33b, 33c, 33d),
- le deuxième circuit (26, 36) d'alimentation comprenant:
∘ un étage intermédiaire (260, 360) de distribution de courant continu,
∘ une ou plusieurs batteries électriques (262, 362) connectées audit étage intermédiaire (260, 360) de distribution de courant continu,
o un convertisseur de courant alternatif-continu (261, 361), qui relie électriquement la génératrice (24, 34) audit étage intermédiaire de distribution (260, 360) de courant continu, et
o un convertisseur de courant continu-alternatif (263a, 263b, 263c, 263d, 363a, 363b, 363c, 363d), qui relie électriquement ledit étage intermédiaire (260, 360) au propulseur d'augmentation de portance (23a, 23b, 23c, 23d, 33a, 33b, 33c, 33d),
- le premier circuit (25, 35) d'alimentation étant configuré pour
délivrer au propulseur de bout d'aile (22, 32) un courant alternatif produit par la génératrice (24, 34), sans conversion intermédiaire de ce courant alternatif sous la forme d'un courant continu.

2. Système de propulsion (20, 30 ; 20', 30') selon la revendication précédente, comprenant en outre un turbopropulseur (21, 31).

3. Système de propulsion (20, 30 ; 20', 30') selon l'une quelconque des revendications précédentes,
- dans lequel le premier circuit (25, 35) d'alimentation et le deuxième circuit (26, 36) d'alimentation sont reliés l'un à l'autre par un étage de distribution de courant alternatif (27, 37), commun à ces deux circuits d'alimentation, l'étage de distribution de courant alternatif (27, 37) étant lui-même relié à la génératrice (24, 34), le convertisseur de courant alternatif-continu (261, 361) du deuxième circuit (26, 36) d'alimentation étant connecté entre l'étage de distribution de courant alternatif (27, 37) et l'étage intermédiaire (260, 360) de distribution de courant continu,
- et dans lequel le convertisseur de courant alternatif-continu (261, 361) est réversible, ledit convertisseur (261, 361) autorisant à la fois un transfert de puissance électrique depuis l'étage de distribution de courant alternatif (27, 37) vers l'étage intermédiaire (260, 360) de distribution de courant continu, et depuis l'étage intermédiaire (260, 360) de distribution de courant continu vers l'étage de distribution de courant alternatif (27, 37).

4. Système de propulsion (20, 30 ; 20', 30') selon l'une quelconque des revendications précédentes, dans lequel le convertisseur de courant continu-alternatif (263a, 263b, 263c, 263d, 363a, 363b, 363c, 363d) du deuxième circuit (26, 36) d'alimentation est réversible, ledit convertisseur autorisant à la fois un transfert de puissance électrique depuis l'étage intermédiaire (260, 360) de distribution de courant continu vers le propulseur d'augmentation de portance (23a, 23b, 23c, 23d, 33a, 33b, 33c, 33d), et depuis le propulseur d'augmentation de portance vers l'étage intermédiaire (260, 360) de distribution de courant continu.

5. Système de propulsion (20, 30 ; 20', 30') selon l'une quelconque des revendications précédentes, comprenant en outre une unité de commande (14) électronique qui comporte au moins un processeur et une mémoire, l'unité de commande (14) étant programmée pour, lors d'un vol de l'aéronef comprenant notamment une phase de décollage (FP2), une phase de croisière (FP4) et une phase d'atterrissage (FP7), commander le moteur du propulseur d'augmentation de portance (23a, 23b, 23c, 23d, 33a, 33b, 33c, 33d) de manière à ce que ce propulseur :
- délivre une puissance mécanique de propulsion en phase de décollage (FP2) ou d'atterrissage (FP7),
- mais reste éteint pendant la majeure partie de la phase de croisière (FP4).

6. Système de propulsion (20, 30 ; 20', 30') selon la revendication précédente, dans lequel l'unité de commande (14) du système de propulsion est programmée en outre pour, pendant la majeure partie du vol de l'aéronef, commander au moteur (221, 321) du propulseur de bout d'aile (22, 32) de délivrer une puissance mécanique de propulsion.

7. Système de propulsion (20, 30 ; 20', 30') selon l'une quelconque des revendications précédentes, dans lequel le propulseur d'augmentation de portance (23a, 23b, 23c, 23d, 33a, 33b, 33c, 33d) comprend une hélice à pas fixe.

8. Système de propulsion (20, 30 ; 20', 30') selon l'une quelconque des revendications précédentes, dans lequel le propulseur de bout d'aile (22, 32) comprend une hélice à pas variable (220, 320).

9. Aéronef (1 ; 2 ; 3 ; 4) à voilure fixe comprenant :
- un fuselage (11), une aile gauche (12) qui s'étend à gauche du fuselage et une aile droite (13) qui s'étend à droite du fuselage,
- un premier système de propulsion (20 ; 20') et un deuxième système de propulsion (30 ; 30'), conformes chacun à l'une quelconque des revendications précédente,
- les propulseurs de bout d'aile (22, 32) des premier et deuxième systèmes de propulsion étant situés respectivement au bout de l'aile gauche (12) et au bout de l'aile droite (13), ou inversement,
- les propulseurs d'augmentation de portance (23a, 23b, 23c, 23d, 33a, 33b, 33c, 33d) étant situés entre le fuselage (11) de l'aéronef et les propulseurs de bout d'aile (22, 32).

10. Aéronef (2 ; 3 ; 4) selon la revendication précédente, dans lequel :
- le premier système de propulsion (20 ; 20') comprend au moins deux propulseurs d'augmentation de portance (23a, 23b, 23c, 23d), l'un (23a, 23b) situé à gauche et l'autre (23c, 23d) situé à droite du fuselage (11), ces deux propulseurs d'augmentation de portance (23a, 23b, 23c, 23d) étant tout deux reliés électriquement à l'étage intermédiaire (260) de distribution de courant continu du premier système de propulsion (20 ; 20'), et dans lequel
- le deuxième système de propulsion (30 ; 30') comprend au moins deux propulseurs d'augmentation de portance (33a, 33b, 33c, 33d), l'un (33c, 33d) situé à gauche et l'autre (33a, 33b) situé à droite du fuselage (11), ces deux propulseurs d'augmentation de portance (33a, 33b, 33c, 33d) étant tout deux reliés électriquement à l'étage intermédiaire (360) de distribution de courant continu du deuxième système de propulsion (30 ; 30').

11. Aéronef (3 ; 4) selon l'une des revendications 9 ou 10, dans lequel
- le premier système de propulsion (20 ; 20') et le deuxième système de propulsion (30 ; 30') comprennent chacun un turbopropulseur (21, 31),
- le turbopropulseur (21) du premier système de propulsion (20 ; 20'), qui entraine la génératrice (24) du premier système de propulsion, est situé à gauche du fuselage (11) tandis que le propulseur de bout d'aile (22 ; 32) du premier système de propulsion est situé au bout de l'aile droite (13) de l'aéronef, et dans lequel
- le turbopropulseur (31) du deuxième système de propulsion (30 ;30'), qui entraine la génératrice (34) du deuxième système de propulsion, est situé à droite du fuselage (11), tandis que le propulseur de bout d'aile (32 ; 22) du deuxième système de propulsion est situé au bout de l'aile gauche (12) de l'aéronef.

12. Aéronef (4) selon l'une quelconque des revendications 9 à 11, dans lequel chaque propulseur de bout d'aile (22, 32) et chaque propulseur d'augmentation de portance (23a, 23b, 23c, 23d, 33a, 33b, 33c, 33d) est relié électriquement d'une part à la génératrice (24) du premier système de propulsion (20') et d'autre part à la génératrice (34) du deuxième système de propulsion (30') de manière à pouvoir être alimenté électriquement indifféremment soit par l'une soit par l'autre de ces deux génératrices (24, 34).

## Patentansprüche

1. Antriebssystem (20, 30; 20', 30') für ein Starrflügelluftfahrzeug (1; 2; 3; 4), das Folgendes umfasst:
- einen Wechselstromgenerator (24, 34),
- mindestens ein Flügelspitzentriebwerk (22, 32) mit einem Wechselstrommotor (221, 321), mit einer Drehrichtung, die sich der Bildung von Randwirbeln an der Flügelspitze entgegensetzt,
- mindestens ein auftriebserhöhendes Triebwerk (23a, 23b, 23c, 23d, 33a, 33b, 33c, 33d), mit einem Wechselstrommotor,
- einen ersten AC-Stromkreis (25, 35), der den Generator (24, 34) mit dem Flügelspitzentriebwerk (22, 32) elektrisch verbindet, und
- einen zweiten AC-Stromkreis (26, 36), der den Generator (24, 34) mit dem auftriebserhöhenden Triebwerk (23a, 23b, 23c, 23d, 33a, 33b, 33c, 33d) elektrisch verbindet,
- wobei der zweite Stromkreis (26, 36) umfasst:
o eine Zwischenstufe (260, 360) zur Gleichstromverteilung,
o eine oder mehrere elektrische Batterien (262, 362), die mit der Zwischenstufe (260, 360) zur Gleichstromverteilung verbunden sind,
o einen Wechselstrom-Gleichstrom-Wandler (261, 361), der den Generator (24, 34) elektrisch mit der Zwischenstufe (260, 360) zur Gleichstromverteilung verbindet, und
∘ einen Gleichstrom-Wechselstrom-Wandler (263a, 263b, 263c, 263d, 363a, 363b, 363c, 363d), der die Zwischenstufe (260, 360) mit dem auftriebserhöhenden Triebwerk (23a, 23b, 23c, 23d, 33a, 33b, 33c, 33d) elektrisch verbindet,
- wobei der erste Stromkreis (25, 35) konfiguriert ist, um einen vom Generator (24, 34) erzeugten Wechselstrom an das Flügelspitzentriebwerk (22,32) zu verteilen, ohne zwischenzeitliche Umwandlung dieses Wechselstroms in einen Gleichstrom.

2. Antriebssystem (20, 30 ; 20', 30') nach dem vorhergehenden Anspruch, außerdem ein Turbotriebwerk (21, 31) umfassend.

3. Antriebssystem (20, 30 ; 20', 30') nach einem der vorhergehenden Ansprüche,
- in dem der erste Stromkreis (25, 35) und der zweite Stromkreis (26, 36) über eine Wechselstromverteilungsstufe (27, 37), die diesen beiden Stromkreisen gemein ist, miteinander verbunden sind, wobei die Wechselstromverteilungsstufe (27, 37) wiederum mit dem Generator (24, 34) verbunden ist und der Wechselstrom-Gleichstrom-Wandler (261, 361) des zweiten Stromkreises (26, 36) zwischen der Wechselstromverteilungsstufe (27, 37) und der Zwischenstufe (260,360) zur Gleichstromverteilung verbunden ist,
- und in dem der Wechselstrom-Gleichstrom-Wandler (261, 361) umkehrbar ist, wobei der Wandler (261, 361) sowohl eine Übertragung elektrischer Leistung von der Wechselstromverteilungsstufe (27, 37) zur Gleichstromverteilungszwischenstufe (260, 360), als auch von der Gleichstromverteilungszwischenstufe (260, 360) zur Wechselstromverteilungsstufe (27, 37) zulässt.

4. Antriebssystem (20, 30 ; 20', 30') nach einem der vorhergehenden Ansprüche, in dem der Gleichstrom-Wechselstrom-Wandler (263a, 263b, 263c, 263d, 363a, 363b, 363c, 363d) des zweiten Stromkreises (26, 36) umkehrbar ist, wobei der Wandler sowohl die Übertragung elektrischer Leistung von der Gleichstromverteilungszwischenstufe (260, 360) zum auftriebserhöhenden Triebwerk (23a, 23b, 23c, 23d, 33a, 33b, 33c, 33d) als auch vom auftriebserhöhenden Triebwerk zur Gleichstromverteilungszwischenstufe (260, 360) zulässt.

5. Antriebssystem (20, 30 ; 20', 30') nach einem der vorhergehenden Ansprüche, ferner umfassend eine elektronische Steuereinheit (14), die mindestens einen Prozessor und einen Speicher umfassst, wobei die Steuereinheit (14) programmiert ist, um, während eines Flugs des Luftfahrzeugs, der insbesondere eine Startphase (FP2), eine Flugphase (FP4) und eine Landephase (FP7) umfasst, den Motor des auftriebserhöhenden Triebwerks (23a, 23b, 23c, 23d, 33a,33b, 33c, 33d) in einer Weise steuert, dass dieses Triebwerk:
- in der Startphase (FP2) oder in der Landephase (FP7) eine mechanische Antriebsleistung erbringt,
- während des größten Teils der Flugphase (FP4) jedoch ausgeschaltet bleibt.

6. Antriebssystem (20, 30; 20', 30') nach dem vorhergehenden Anspruch, in dem die Steuereinheit (14) des Antriebssystems zudem programmiert ist, um während des größten Teils des Flugs des Luftfahrzeugs den Motor (221, 321) des Flügelspitzentriebwerks (22, 32) so zu steuern, dass er eine mechanische Antriebsleistung erbringt.

7. Antriebssystem (20, 30; 20`, 30') nach einem der vorhergehenden Ansprüche, in dem das auftriebserhöhende Triebwerk (23a, 23b, 23c, 23d, 33a, 33b, 33c,33d) einen Festpropeller umfasst.

8. Antriebssystem (20, 30; 20`, 30') nach einem der vorhergehenden Ansprüche, in dem das Flügelspitzentriebwerk (22, 32) einen Verstellpropeller (220, 320) umfasst.

9. Starrflügelluftfahrzeug (1; 2; 3; 4) umfassend:
- einen Flugzeugrumpf (11), eine linke Tragfläche (12), die sich linkerhand des Rumpfes erstreckt und eine rechte Tragfläche (13), die sich rechterhand des Rumpfes erstreckt,
- ein erstes Antriebssystem (20; 20`) und ein zweites Antriebssystem (30; 30'), die jeweils einem der vorhergehenden Ansprüche entsprechen,
- wobei sich die Flügelspitzentriebwerke (22,32) des ersten und zweiten Antriebssystems jeweils am Ende des linken Flügels (12) und am Ende des rechten Flügels (13), bzw, umgekehrt befinden,
- wobei sich die auftriebserhöhenden Triebwerke (23a, 23b, 23c, 23d, 33a, 33b, 33c, 33d) zwischen dem Rumpf (11) des Luftfahrzeugs und den Triebwerken an den Flügelspitzen (22, 32) befinden.

10. Luftfahrzeug (2 ; 3 ; 4) nach dem vorhergehenden Anspruch, in dem:
- das erste Antriebssystem (20; 20') mindestens zwei auftriebserhöhende Triebwerke (23a, 23b, 23c, 23d) umfasst, von denen sich eins (23a, 23b) links und das andere (23c, 23d) rechts vom Rumpf (11) befindet, wobei diese zwei auftriebserhöhenden Triebwerke (23a, 23b, 23c, 23d) beide elektrisch mit der Gleichstromverteilungszwischenstufe (260) des ersten Antriebssystems (20 ; 20') verbunden sind, und in dem
- das zweite Antriebssystem (30; 30') mindestens zwei auftriebserhöhende Triebwerke (33a, 33b, 33c, 33d) umfasst, von denen sich eins (33c, 33d) links und das andere (33a, 33b) rechts vom Rumpf (11) befindet, wobei diese beiden auftriebserhöhenden Triebwerke (33a, 33b, 33c, 33d) beide elektrisch mit der Gleichstromverteilungszwischenstufe (360) des zweiten Antriebssystems (30; 30') verbunden sind.

11. Luftfahrzeug (3; 4) nach einem der Ansprüche 9 oder 10, in dem
- das erste Antriebssystem (20; 20') und das zweite Antriebssystem (30; 30') jeweils ein Turbo-Triebwerk (21, 31) umfassen,
- sich das Turbo-Triebwerk (21) des ersten Antriebssystems (20; 20'), das den Generator (24) des ersten Antriebssystems antreibt, auf der linken Seite des Rumpfes (11) befindet, während sich das Flügelspitzentriebwerk (22; 32) des ersten Antriebssystems am Ende des rechten Flügels (13) des Luftfahrzeugs befindet, und in dem
- das Turbo-Triebwerk (31) des zweiten Antriebssystems (30; 30'), das den Generator (34) des zweiten Antriebssystems antreibt, sich auf der rechten Seite des Rumpfes (11) befindet, während sich das Flügelspitzentriebwerk (32; 22) des zweiten Antriebssystems am Ende des linken Flügels (12) des Luftfahrzeugs befindet.

12. Luftfahrzeug (4) nach einem der Ansprüche 9 bis 11, in dem jedes Flügelspitzentriebwerk (22, 32) und jedes auftriebserhöhende Triebwerk (23a, 23b, 23c, 23d, 33a, 33b, 33c, 33d) einerseits mit dem Generator (24) des ersten Antriebssystems (20') und andererseits mit dem Generator (34) des zweiten Antriebssystems (30') elektrisch verbunden ist, so dass sie unterschiedslos entweder von dem einen oder von dem anderen dieser beiden Generatoren (24, 34) elektrisch versorgt werden können.

## Claims

1. Propulsion system (20, 30; 20', 30') for a non-rotary-wing aircraft (1; 2; 3; 4) comprising:
- an alternating-current generator (24, 34),
- at least one wingtip propulsion unit (22, 32) comprising an alternating-current motor (221, 321), having a direction of rotation that opposes the formation of wingtip vortices,
- at least one lift-increase propulsion unit (23a, 23b, 23c, 23d, 33a, 33b, 33c, 33d), comprising an alternating-current motor,
- a first AC power supply circuit (25, 35), that electrically connects the generator (24, 34) to the wingtip propulsion unit (22, 32), and
- a second AC power supply circuit (26, 36), that electrically connects the generator (24, 34) to the lift-increase propulsion unit (23a, 23b, 23c, 23d, 33a, 33b, 33c, 33d),
- the second power supply circuit (26, 36) comprising:
∘ an intermediate DC distribution stage (260, 360),
∘ one or more electric batteries (262, 362) connected to said intermediate DC distribution stage (260, 360),
∘ an AC/DC converter (261, 361), that electrically connects the generator (24, 34) to said intermediate DC distribution stage (260, 360), and
∘ a DC/AC converter (263a, 263b, 263c, 263d, 363a, 363b, 363c, 363d), that electrically connects said intermediate stage (260, 360) to the lift-increase propulsion unit (23a, 23b, 23c, 23d, 33a, 33b, 33c, 33d),
- the first power supply circuit (25, 35) being configured to deliver (22, 32) an AC current produced by the generator (24, 34), to the wingtip propulsion unit, without intermediate conversion of this alternating current into direct current.

2. Propulsion system (20, 30; 20', 30') according to the preceding claim, further comprising a turboprop (21, 31).

3. Propulsion system (20, 30; 20', 30') according to any preceding claim,
- wherein the first power supply circuit (25, 35) and the second power supply circuit (26, 36) are connected to one another by an AC distribution stage (27, 37), common to these two power supply circuits, the AC distribution stage (27, 37) itself being connected to the generator (24, 34), the AC/DC converter (261, 361) of the second power supply circuit (26, 36) being connected between the AC distribution stage (27, 37) and the intermediate DC distribution stage (260, 360),
- and wherein the AC/DC converter (261, 361) is reversible, said converter (261, 361) allowing both a transfer of electric power from the AC distribution stage (27, 37) to the intermediate DC distribution stage (260, 360), and from the intermediate DC distribution stage (260, 360) to the AC distribution stage (27, 37).

4. Propulsion system (20, 30; 20', 30') according to any preceding claim, wherein the DC/AC converter (263a, 263b, 263c, 263d, 363a, 363b, 363c, 363d) of the second power supply circuit (26, 36) is reversible, said converter allowing both a transfer of electric power from the intermediate DC distribution stage (260, 360) to the lift-increase propulsion unit (23a, 23b, 23c, 23d, 33a, 33b, 33c, 33d), and from the lift-increase propulsion unit to the intermediate DC distribution stage (260, 360).

5. Propulsion system (20, 30; 20', 30') according to any preceding claim, further comprising an electronic control unit (14) that comprises at least one processor and one memory, the control unit (14) being programmed to, during a flight of the aircraft comprising, inter alia, a take-off phase (FP2), a cruising phase (FP4) and
a landing phase (FP7), control the motor of the lift-increase propulsion unit (23a, 23b, 23c, 23d, 33a, 33b, 33c, 33d) in such a way that this propulsion unit:
- delivers a mechanical propulsion power in the take-off (FP2) or landing (FP7) phase,
- but remains off during most of the cruising phase (FP4).

6. Propulsion system (20, 30; 20', 30') according to the preceding claim, wherein the control unit (14) of the propulsion system is further programmed to, during most of the flight of the aircraft, control the motor (221, 321) of the wingtip propulsion unit (22, 32) to deliver a mechanical propulsion power.

7. Propulsion system (20, 30; 20', 30') according to any preceding claim, wherein the lift-increase propulsion unit (23a, 23b, 23c, 23d, 33a, 33b, 33c, 33d) comprises a fixed-pitch propeller.

8. Propulsion system (20, 30; 20', 30') according to any preceding claim, wherein the wingtip propulsion unit (22, 32) comprises a variable-pitch propeller (220, 320).

9. Non-rotary-wing aircraft (1; 2; 3; 4) comprising:
- a fuselage (11), a left wing (12) that extends to the left of the fuselage and a right wing (13) that extends to the right of the fuselage,
- a first propulsion system (20; 20') and a second propulsion system (30; 30'), each in accordance with any of the preceding claims,
- the wingtip propulsion units (22, 32) of the first and second propulsion systems being located respectively at the tip of the left wing (12) and at the tip of the right wing (13), or inversely,
- the lift-increase propulsion units (23a, 23b, 23c, 23d, 33a, 33b, 33c, 33d) being located between the fuselage (11) of the aircraft and the wingtip propulsion units (22, 32).

10. Aircraft (2; 3; 4) according to the preceding claim, wherein:
- the first propulsion system (20; 20') comprises at least two lift-increase propulsion units (23a, 23b, 23c, 23d), one (23a, 23b) located on the left and the other (23c, 23d) located on the right of the fuselage (11), these two lift-increase propulsion units (23a, 23b, 23c, 23d) being both electrically connected to the intermediate DC distribution stage (260) of the first propulsion system (20; 20'), and wherein
- the second propulsion system (30; 30') comprises at least two lift-increase propulsion units (33a, 33b, 33c, 33d), one (33c, 33d) located on the left and the other (33a, 33b) located on the right of the fuselage (11), these two lift-increase propulsion units (33a, 33b, 33c, 33d) being both electrically connected to the intermediate DC distribution stage (360) of the second propulsion system (30; 30').

11. Aircraft (3; 4) according to claim 9 or 10, wherein
- the first propulsion system (20; 20') and the second propulsion system (30; 30') each comprise a turboprop (21, 31),
- the turboprop (21) of the first propulsion system (20; 20'), which drives the generator (24) of the first propulsion system, is located on the left of the fuselage (11) while the wingtip propulsion unit (22; 32) of the first propulsion system is located at the tip of the right wing (13) of the aircraft, and wherein
- the turboprop (31) of the second propulsion system (30;30'), which drives the generator (34) of the second propulsion system, is located on the right of the fuselage (11), while the wingtip propulsion unit (32; 22) of the second propulsion system is located at the tip of the left wing (12) of the aircraft.

12. Aircraft (4) according to any of claims 9 to 11, wherein each wingtip propulsion unit (22, 32) and each lift-increase propulsion unit (23a, 23b, 23c, 23d, 33a, 33b, 33c, 33d) is electrically connected on the one hand to the generator (24) of the first propulsion system (20') and on the other hand to the generator (34) of the second propulsion system (30') in such a way as to be electrically powered indifferently either by one or by the other of these two generators (24, 34).
